**Europäisches Patentamt**

(19) **European Patent Office**

**Office européen des brevets**

(11) Publication number : **0 158 447 B2**

(12) # NEW EUROPEAN PATENT SPECIFICATION

(45) Date of publication of the new patent specification : **05.01.94 Bulletin 94/01**

(51) Int. Cl.⁵ : **G05B 19/417**

(21) Application number : **85301727.5**

(22) Date of filing : **13.03.85**

(54) **System for controlling a robot in association with a rotary table.**

(30) Priority : **14.03.84 JP 47179/84**

(43) Date of publication of application :
**16.10.85 Bulletin 85/42**

(45) Publication of the grant of the patent :
**26.07.89 Bulletin 89/30**

(45) Mention of the opposition decision :
**05.01.94 Bulletin 94/01**

(84) Designated Contracting States :
**DE FR GB**

(56) References cited :
**EP-A- 0 068 768**
**EP-A- 0 120 677**
**DE-A- 3 416 227**
**DE-B- 1 943 558**
**DE-C- 3 151 173**
**FR-A- 2 458 363**
**COMPUTER, vol. 15, no. 6, June 1982, pages 9-23, Long Beach, California, US; R.A.JARVIS: "Robotics laboratory"**

(73) Proprietor : **TOYOTA JIDOSHA KABUSHIKI KAISHA**
**1, Toyota-cho Toyota-shi**
**Aichi-ken 471 (JP)**
Proprietor : **KABUSHIKI KAISHA TOYOTA CHUO KENKYUSHO**
**41-1, Aza Yokomichi Oaza Nagakute**
**Nagakute-cho**
**Aichi-gun Aichi-ken, 480-11 (JP)**

(72) Inventor : **Ishiguro, Yasuo**
**c/o Toyota Jidosha K.K. 1, Toyota-cho**
**Toyota-shi Aichi-ken (JP)**
Inventor : **Itou, Yoshizumi**
**c/o Toyota Jisohia K.K. 1, Toyota-cho**
**Toyota-shi Aichi-ken (JP)**
Inventor : **Shiroshita, Osamu**
**41-3, Aza Yokomichi Oaza Nagakute**
**Nagakute-cho Aichi-gun Aichi-ken (JP)**
Inventor : **Nakano, Masaru**
**84-1, Otokoyama Narumi-cho**
**Midori-ku Nagoya-shi Aichi-ken (JP)**

(74) Representative : **Ben-Nathan, Laurence Albert et al**
**Urquhart-Dykes & Lord 91 Wimpole Street**
**London W1M 8AH (GB)**

**EP 0 158 447 B2**

## Description

The present invention relates to a system for controlling an industrial robot in association with a rotary table.

In the prior art, there is already known an industrial robot which is operated in association with a rotary table mounted with a workpiece. This simplifies the movement on the robot side, speeds up the work, and enables greater compactness. Sometimes, transfer means is annexed to either the robot or rotary table.

In such a conventional robot apparatus, the robot or rotary table itself is mounted on the transfer shaft of the travelling means. That is to say, a very heavy article is moved. As a result, the transfer shaft and travelling means become large in scale and it is difficult to ensure precision. Further, a large space is necessary for the operation of the travelling means along the transfer shaft. Still further, there are limitations on the disposition of the transfer shaft and the need for adjustment of the positional relation with peripheral equipment.

In another prior art robot apparatus, teaching data is stored in the form of values on a specific coordinate system (absolute coordinate system) of the robot or in the form of displacement (angle) on each axis of the robot. When this teaching data is used for playback, the interpolative calculations carried out in consideration of the relative movement between the robot and rotary table becomes much more complicated and the overall computation time becomes longer. It is not possible to reduce the interpolation time, so there is a problem of reduced precision of the path. Moreover, there is the disadvantage that the data representing the shape of each workpiece varies with the position of the workpiece with teaching data of the absolute coordinate system. There is a further disadvantage that, when the relative position between the rotary table and the robot is changed due to a change in the position of installation of the robot or the rotary table, the teaching data becomes inaccurate and must be revised.

The present invention intends to solve the above-mentioned problems in the prior art.

It is an object of the invention to provide a system for controlling a robot in association with a rotary table wherein the operation time can be shortened and control may be carried out with a high precision.

In accordance with the present invention, there is provided a system for controlling a robot operating in association with a rotary table as claimed in claim 1.

Preferably, the control circuit further carries out a step of adapting the interpolation points calculated by said calculating step to compute the rotational angle of said rotary table; a step of computing the coordinates rotated by said rotational angle around the axis of said rotary table coordinate system, a step of transforming the rotary table coordinate system of the data obtained by said computing step to the robot coordinate system; and a step of operating said robot by the output of the transformation step.

In the drawings:-

Figure 1 is a schematic view and block diagram of an embodiment of the present invention;

Fig. 2 is a view of a model pattern of relative movement of the robot and rotary table in Fig. 1;

Fig. 3 is a block diagram of the control circuit in Fig. 1;

Fig. 4 is a flow chart of the operation process; and

Fig. 5 is an explanatory diagram of the interpolation and coordinate transformation.

In order that the invention and its various preferred features may be understood more easily, embodiments thereof will now be described in detail with reference to the drawings.

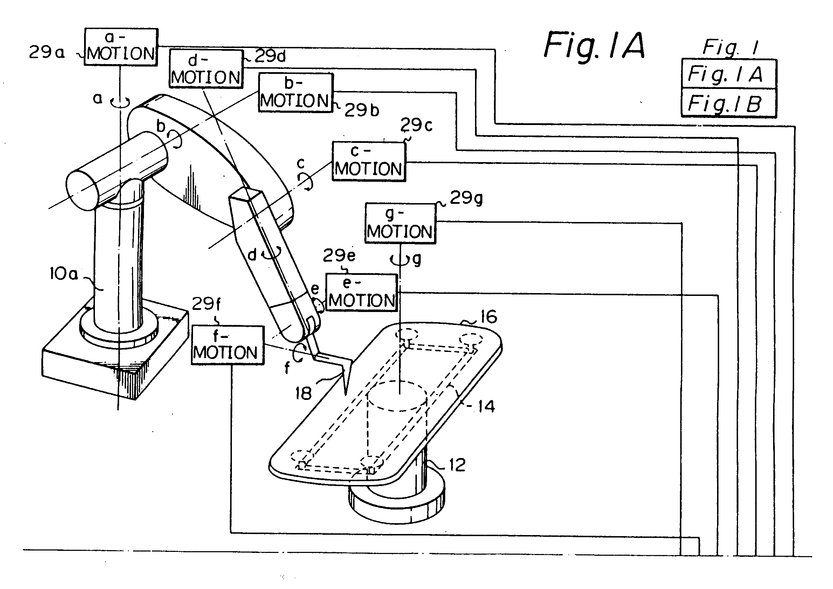

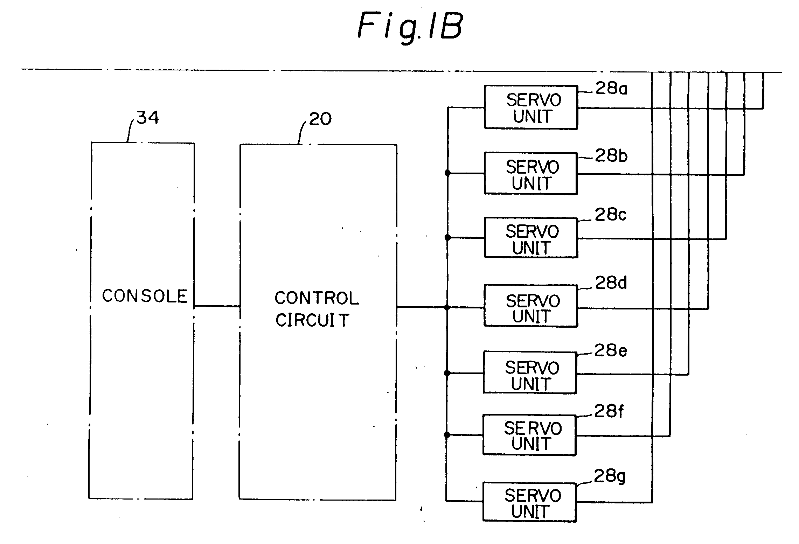

Figure 1 is a schematic view and block diagram of one embodiment in accordance with the present invention. In the figure, reference numeral 10 indicates a six-axis articulated robot, and 12 a rotary table rotating in synchronization therewith. The robot 10 is constructed such that it may execute rotational movement about each axis a, b, c, d, e and f, as shown by the arrows. On the upper portion of the rotating table 12 is mounted a jig 14 for fixing a workpiece 16, such as a window glass of an automobile, on the rotary table 12. A hand portion 18 of the robot 10 applies sealant, paints, deburrs, polishes, emplaces rubber elements, and engages in other operations on the workpiece 16.

The rotary table 12 is constructed for rotational movement about its rotational shaft. The amount of rotational movement is controlled by a driving signal delivered from a control circuit 20. The rotational position of the rotary table 12 is monitored by an encoder and a potentiometer mounted on its rotational shaft. The detected output is fed back to the control circuit side to control the position. On the other hand, the amount of rotation in each axis of the robot 10 is controlled by a driving signal from the control circuit 20. The rotational position is also detected by an encoder and a potentiometer for feedback to the control circuit side.

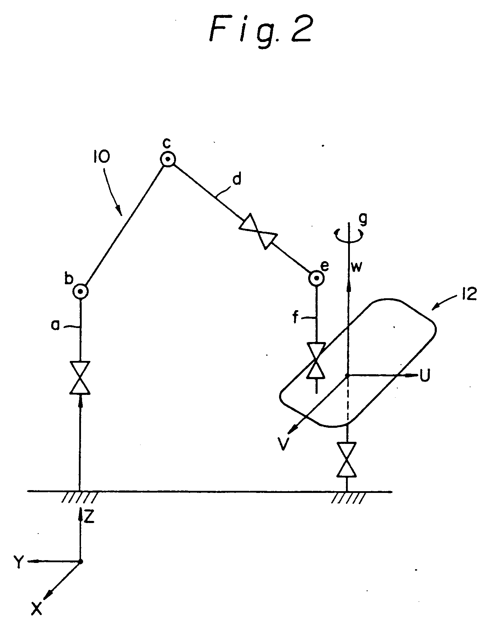

Figure 2 shows a model pattern of the function of the robot 10 and the rotary table 12 of Fig. 1. For the absolute coordinate system of the robot 10, the a-axis (axis of swivel base 10a) is taken as the Z-axis. The X-axis and Y-axis are set horizontally and perpendicularly to the Z-axis. On the other hand, the rotational shaft of the rotary table 12 is taken as the W-axis and a U-axis and V-axis set horizontally and perpendicularly to the W-axis to form a rotary table coordinate system. In accordance with the present invention, teaching is executed using this rotary table coordinate system.

The hand of the robot moves in the U-W plane of the rotary table coordinate system.

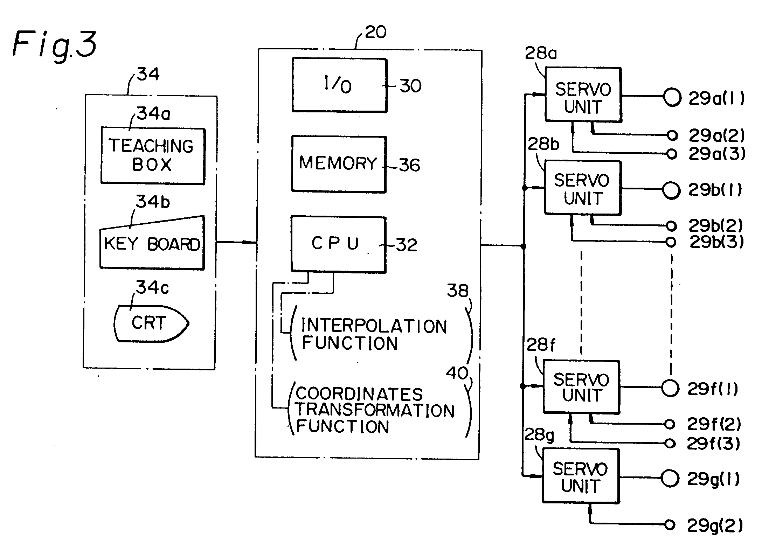

Figure 3 is a block diagram of an example of the control circuit of Fig. 1. In the figure, reference numerals 29a(1), 29b(1), ..., 29f(1) are servomotors of each axis of the robot 10. Reference numeral 29g(1) is a servomotor for the rotational shaft of the rotary table 12. On each axis, encoders 29a(2), 29b(2),... 29f(2), 29g(2) and potentiometers 29a(3), 29b(3), 29f(3), are set to detect the position of rotational movement due to each servomotor. Each distinct driving pulse is applied to each servomotor 29a(1), 29b(1), ..., 29f(1), 29g(1) from each servo unit 28a, 28b,..., 28f, 28g. On the other hand, each piece of information on the present position detected is sent to each servo unit 28a, 28b, ..., 28f, 28g from each encoder 29(a)2, 29b(2), ..., 29f(2), 29g(2) and each potentiometer 29a(3), 29b(3), ..., 29f(3). Each servo unit 28a, 28b, ..., 28f, 28g controls the axis positions in response to each indicated value sent from a central processing unit (CPU) 32 or microcomputer 32 through an input/output (I/O) port 30.

Each potentiometer 29a(3), 29b(3), ...,29f(3) detects the rough position of rotational movement of each axis, while each encoder 29a(2), 29b(2),..., 29f(2), 29g(2) detects the precise position of rotational movement. As shown in Fig. 3, reference numeral 34 denotes a console to input and/or output the data from the operation side and is composed of a teaching box 34a, a keyboard 34b, and a cathode ray tube (CRT) display 34c. Reference numeral 36 denotes a memory which stores the input data, teaching data, and so on from the console 34, 38 an interpolating device for implementing path interpolation as during playback, and 40 a coordinate transformation device for rotating an interpolation point on the rotary table coordinate system and transforming a post-rotation point from the rotary table coordinate system to the absolute coordinate system.

The operation of the system will now be explained with reference to Fig. 1.

The teaching operation is performed with the rotary table 12 not rotating but kept fixed at a predetermined position. An operator moves the hand portion 18 of the robot 10 to teach the operation, thereby obtaining the position of the tools of the robot 10 and the attitude data of the hand in the absolute coordinate system.

Using the robot coordinate system X, Y, and Z and the rotary table coordinate system U, V, and W and representing both coordinate systems as a matrix $M_r(H)$, the following equation can be obtained.

$$M_r(H) = \begin{pmatrix} N(X) & O(X) & A(X) & X \\ N(Y) & O(Y) & A(Y) & Y \\ N(Z) & O(Z) & A(Z) & Z \\ 0 & 0 & 0 & 1 \end{pmatrix} \qquad (1)$$

where X, Y, and Z denote the positional data of the hand; N(X), N(Y), and N(Z) normal vector; O(X), O(Y), and O(Z) orientation vector; and A(X), A(Y), and A(Z) approach vector.

As shown in Fig. 1 and Fig. 2, when the transformation matrix from the rotary table coordinate system (U, V, W) to the robot absolute coordinate system (X, Y, Z) is taken as T and the inverse matrix of the above-mentioned transformation matrix is taken as $T^{-1}$, the position and attitude data $M_t(H)$ in the rotary table coordinate system is represented by the following equation (2). The position and attitude data of the robot absolute coordinate system obtained by the teaching data is transformed to the position and attitude data of this rotary table coordinate system and then stored in a memory 36 as the teaching data. Therefore, when a matrix of the robot coordinate system is represented as $M_r(H)$ and a matrix of the rotary table coordinate system as $M_t(H)$, then

$$M_t(H) = T^{-1} \cdot M_r(H) \qquad (2)$$

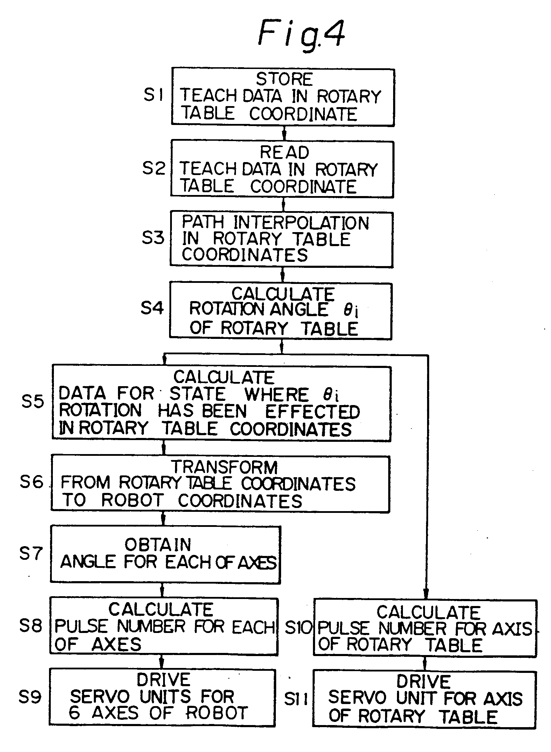

The playback operation follows the procedure shown in Fig. 4. First, the spacing between two points $H_0$ and $H_1$ in the teaching data on the rotary table coordinate system is interpolated linearly to obtain the path of the hand of the robot 10. This is done by the conventional method of connecting by a straight line the two teaching points $H_0$ and $H_1$ in the teaching data stored in the memory 36 and dividing the line to obtain points $P_1, P_2, P_3,..., P_i$ indicating the movement of the hand with a time $\Delta t$. As the time $\Delta t$, tens of milliseconds are selected.

The rotational angle component on the rotary table coordinate system of each interpolation point $P_1, P_2, ...$ $P_i$ thus obtained is obtained next. If the rotational angle component of the rotary table coordinate system of the interpolation point $P_i$ is taken as $\theta_i$, then

$$\theta_i = -\tan^{-1} \frac{P_{iV}}{P_{iU}} \qquad (3)$$

where $P_{iU}$ is a U-component of the interpolation point $P_i$ on the rotary table coordinate system and $P_{iV}$ is a V-component of the interpolation point $P_i$ on the rotary table coordinate system.

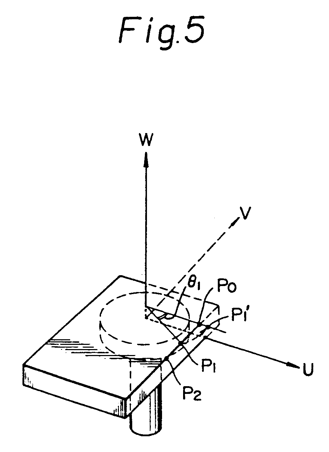

To superpose the interpolation point $P_i$ onto the U-axis when tis interpolation point $P_i$ is projected on the U-V plane of the rotary table coordinate system, the interpolation point $P_i$ may be rotated by $\theta_i$ around the W-axis of the rotary table coordinate system, if the prior interpolation point $P_{i-1}$ was superposed onto the U-axis. This will be explained more concretely using Fig. 5. Assuming the projection of the first point $P_0$ of the teaching data on the U-V plane falls on the U-axis, the rotational angle $\theta_1$ from the point $P_0$ to the first interpolation point $P_1$ is obtained from the above-mentioned equation (3). By carrying out a rotation of angle $\theta_1$ with respect to the W-axis from point $P_1$, point $P_1'$ is reached. The matrix of the point $P_1'$ is calculated by the following equation.

$$M_t(P_1') = \begin{pmatrix} \cos\theta_1 & \sin\theta_1 & 0 & 0 \\ -\sin\theta_1 & \cos\theta_1 & 0 & 0 \\ 0 & 0 & 1 & 0 \\ 0 & 0 & 0 & 1 \end{pmatrix} \cdot M_t(P_1) \qquad (5)$$

Using the above-described transformation matrix T, the post-rotation point $P_1'$ is transformed to values of the absolute coordinate system of the robot 10. Taking the interpolation point on the robot absolute coordinate system as $M_r(P_1')$, the following equation is obtained.

$$M_r(P_1') = T \cdot M_t(P_1') \qquad (6)$$

This $M_r(P_1')$ is transformed to the angle of each axis of the robot 10, matched with the number pulses of the encoders of each axis, the servomotors 29a(1), 29b(1), ..., 29f(1), are driven for movement of the hand of the robot to the interpolation point $P_1$ shown in Fig. 5.

On the other hand, as for the rotary table 12, the number of pulses of the encoder corresponding to $\theta_1$ is calculated and the servomotor 29g(1) is driven whereupon the rotary table 12 rotates by $\theta_1$. Therefore, the hand of the robot 10 and the workpiece 16 of the rotary table 12 meet at the point $P_1'$ which is reached by the rotation of an angle $\theta_1$ with respect to the W-axis from point $P_1$. In the same way, the above-described computation is effected for the other interpolation points $P_2$, $P_3$, ... $P_i$ in real time. Each interpolation point is rotated to a point projected on the U-axis of the rotary table coordinate system every time $\Delta t$, and, as a value at said time, transformed to the robot absolute coordinate system. The rotary table 12 is rotated to the point projected on the U-axis after $\Delta t$ seconds, so it can move to the same point with the robot 10.

As is apparent from the above-described explanation, the hand of the robot 10 executes only two-dimensional movement on the plane of U-W, as shown in Fig. 2. As $\Delta t$ is an extremely short time, such as several tens of msec, the command values of the interpolation points, which are successively output enable the robot 10 and the rotary table 12 to be controlled continuously in perfect synchronization.

As described above, the robot apparatus of the above embodiments stores teaching data as values of the rotary table coordinate system and seeks each interpolation point by linear interpolation on the rotary table coordinate system. Therefore, the interpolation during playback becomes much simple and high precise.

As the robot apparatus of the present invention uses linear interpolation for path interpolation, computations are easier in comparison with circular arc interpolation and the like. As the path between two points is linear, an operator can easily infer how the hand of the robot moves on a same plane during playback. Consequently, teaching becomes simple and the safety of the apparatus as a whole can be more easily ensured.

The robot apparatus of the present invention is designed so that neither the robot nor the rotary table have to move linearly, replacing this with movement of the robot hand on a straight line in a same plane. Thus, the conventional problems of the larger size of the apparatus resulting from the provision of travelling means for linear movement of the robot or rotary table, the difficulty of maintenance of precision, and the need for a large space and adjustment of the relative position of peripheral equipment are eliminated.

Further, as the interpolation points are calculated in real time during playback, only 1/15th of the data in the case of computing the interpolation points in advance need be stored in the memory 36.

Furthermore, linear interpolation enables a shorter computation time, and there is no necessary to prolong the real-time computation time drastically, the sampling time can be kept to less than several tens of msec. This eliminates the deterioration in precision resulting from prolongation of the sampling time.

Still further, as the robot hand is moved only in two dimensions, as shown by U and W in the figures, it is much easier to supply slender, continuous members in attaching such members around the workpiece.

It should be noted that while the above-described embodiment was explained in reference to linear interpolation used for the path interpolation, curve interpolation or a combination of linear and curve interpolation may also be adopted depending upon the particular purpose.

## Claims

1. A system for controlling a robot operating in association with a rotary table, comprising:
   a multi-joint robot adapted to carry out an operation of three-dimensional positions and attitudes in a robot Cartesian coordinate system;
   a rotary table adapted to rotate in synchronization with the operation of said robot and having a supporting plane to carry a workpiece; and
   a control circuit for interpolating teaching data on the workpiece and generating, on the basis of said interpolated teaching data, a signal for defining the operation of the robot in said Cartesian coordinate system and a signal representing a rotational angle for defining the operation of said rotary table;
   said control circuit carrying out a step of composing and storing teaching data as values on a rotary table coordinate system, the axis (W) about which the rotary table rotates being perpendicular to said workpiece supporting plane of the rotary table, so that it is vertical when said workpiece supporting plane is disposed horizontally and a step of calculating each of the interpolation points by carrying out path interpolation of said stored teaching data on the rotary table coordinate system.

2. A system according to claim 1, wherein said control circuit further carries out a step of calculating the rotational angle of the rotary table which is required to be rotated, a step of computing the coordinates rotated by said rotational angle around the axis of rotation of said rotary table, a step of transforming the data obtained by said computing step from the rotary table coordinates to the robot coordinates, and a step of operating said robot by the output of the transformation step.

## Patentansprüche

1. System zur Steuerung eines in Verbindung mit einem Drehtisch arbeitenden Roboters, mit:
   einem vielgelenkigen Roboter, der dazu geeignet ist, einen dreidimensionale Lagen und Stellungen umfassenden Arbeitsvorgang in einem kartesischem Roboter-Koordinatensystem auszuführen;
   einem Drehtisch, der dazu geeignet ist, synchron zu dem Arbeitsvorgang des Roboters zu drehen und der eine Auflagefläche zum Tragen eines Werkstückes hat; und
   einer Steuerschaltung zur Interpolation von Einlerndaten für das Werkstück und zur Erzeugung eines Signals zur Bestimmung der Arbeitsweise des Roboters im kartesischen Koordinatensystem und eines einem Drehwinkel entsprechenden Signals zur Bestimmung der Arbeitsweise des Drehtischs auf der Basis der Einlerndaten;
   wobei die Steuerschaltung einen Schritt zur Zusammenstellung und Speicherung von Einlerndaten als Daten in einem Drehtisch-Koordinatensystem ausführt, die Achse (W), um die der Drehtisch dreht senkrecht zu der Werkstückauflagefläche des Drehtisches ist, so daß die Drehachse vertikal ist, wenn die Werkstückauflagefläche horizontal angeordnet ist, und die Steuerschaltung einen Schritt zur Berechnung aller Interpolationspunkte durch eine Verlaufinterpolation der gespeicherten Einlerndaten im Drehtisch-Koordinatensystem ausführt.

2. System nach Anspruch 1, in dem die Steuerschaltung ferner einen Schritt zur Berechnung des Drehwinkels des Drehtisches, um den dieser gedreht werden soll, einen Schritt zur Berechnung der um den Drehwinkel um die Drehachse des Drehtisches gedrehten Koordinaten, einen Schritt zur Umsetzung der bei dem Berechnungsschritt erhaltenen Daten von den Drehtischkoordinaten in die Roboterkoordinaten und einen Schritt zur Steuerung des Roboters durch die Ausgangsdaten aus dem Umsetzungsschritt ausführt.

## Revendications

1. Un système de commande d'un robot fonctionnant en association avec un plateau rotatif, comprenant:
   - un robot multijoint apte à exécuter une opération comprenant des positions et des attitudes tridimensionnelles dans un système de robot à coordonnées cartésiennes;
   - un plateau rotatif apte à tourner en synchronisme avec le fonctionnement dudit robot, et comportant un plan de support pour porter une pièce à usiner; et
   - un circuit de commande destiné à faire l'interpolation de données d'instructions sur la pièce à usiner et à émettre, sur la base desdites données d'instructions interpolées, un signal destiné à définir le fonctionnement du robot dans ledit système de coordonnées cartésiennes et un signal représentant un angle de rotation pour définir le fonctionnement dudit plateau rotatif;

- ledit circuit de commande réalisant une étape consistant à composer et à stocker des données d'instruction servant de valeurs selon un système de coordonnées du plateau rotatif, l'axe (W) sur lequel tourne le plateau rotatif étant perpendiculaire audit plan de support de pièce à usiner du plateau rotatif, de telle façon qu'il soit vertical lorsque ledit plan de support de pièce à usiner est disposé horizontalement, et une étape consistant à calculer chacun des points d'interpolation en réalisant le trajet d'interpolation desdites données d'instructions stockées selon le système de coordonnées du plateau rotatif.

2.  Un système selon la revendication 1, dans lequel ledit circuit de commande réalise en outre une étape consistant à calculer l'angle de rotation du plateau rotatif qu'il est nécessaire de réaliser, une étape consistant à calculer les coordonnées ayant fait l'objet de la rotation dudit angle de rotation sur l'axe de rotation dudit plateau rotatif, une étape consistant à transformer les données obtenues par ladite étape de calcul, des coordonnées du plateau rotatif en coordonnées du robot, et une étape consistant à actionner ledit robot au moyen des données de sortie de l'étape consistant à transformer.

Fig. I

| Fig. I A |
|---|
| Fig. I B |

Fig. IA

29a, a-MOTION, 29d, d-MOTION, 29b, b-MOTION, 29c, c-MOTION, 29g, g-MOTION, 29e, e-MOTION, 29f, f-MOTION

a, b, c, d, e, f, g

10a, 18, 16, 14, 12

7

Fig.1B

28a SERVO UNIT

28b SERVO UNIT

28c SERVO UNIT

28d SERVO UNIT

28e SERVO UNIT

28f SERVO UNIT

28g SERVO UNIT

20 CONTROL CIRCUIT

34 CONSOLE

# Fig. 2

Fig.3

# Fig.4

S1 | STORE
TEACH DATA IN ROTARY
TABLE COORDINATE

S2 | READ
TEACH DATA IN ROTARY
TABLE COORDINATE

S3 | PATH INTERPOLATION
IN ROTARY TABLE
COORDINATES

S4 | CALCULATE
ROTATION ANGLE $\theta_i$
OF ROTARY TABLE

S5 | CALCULATE
DATA FOR STATE WHERE $\theta_i$
ROTATION HAS BEEN EFFECTED
IN ROTARY TABLE COORDINATES

S6 | TRANSFORM
FROM ROTARY TABLE COORDINATES
TO ROBOT COORDINATES

S7 | OBTAIN
ANGLE FOR EACH OF AXES

S8 | CALCULATE
PULSE NUMBER FOR EACH
OF AXES

S10 | CALCULATE
PULSE NUMBER FOR AXIS
OF ROTARY TABLE

S9 | DRIVE
SERVO UNITS FOR
6 AXES OF ROBOT

S11 | DRIVE
SERVO UNIT FOR AXIS
OF ROTARY TABLE

Fig.5